# EUROPEAN PATENT SPECIFICATION

(11) **EP 0 652 621 B1**
(45) Date of publication and mention of the grant of the patent: **14.01.1998**
(21) Application number: 94202964.6
(22) Date of filing: 13.10.1994
(51) Int. Cl.: H02J 7/14, H02J 7/24

(54) **Method and apparatus for maintaining the state of charge of a battery**
Verfahren und Vorrichtung zum Aufrechterhalten des Ladezustandes einer Batterie
Procédé et appareil pour le maintien d'état de charge d'une batterie

(30) Priority: 04.11.1993 US 145539
(43) Date of publication of application: 10.05.1995
(73) Proprietor: GENERAL MOTORS CORPORATION, Detroit Michigan 48202 (US)
(72) Inventor: Center, Marc Bryan, Royal Oak, Michigan 48067 (US); De Claire, Alton George, Jr., Troy, Michigan 48098 (US); Zahorchak, John Albert, Warren, Michigan 48093 (US)
(74) Representative: Denton, Michael John

(56) References cited:
- US-A- 4 527 112
- US-A- 4 607 336
- US-A- 4 611 560
- US-A- 4 649 878
- US-A- 4 940 928

## Description

This invention relates to a method of maintaining the state of charge of a vehicle battery and to battery charge control apparatus.

A typical motor vehicle electrical system has a voltage regulated alternator connected to the vehicle engine to provide power for vehicle electrical loads such as lighting, instrumentation, climate controls and other power accessories during operation of the vehicle. Ideally, sufficient generated electrical power remains available during all periods of vehicle operation to maintain the state of charge of the battery. However, it is well recognised that there are periods of vehicle operation during which the state of charge of the battery is actually reduced due to net vehicle load power consumption exceeding that generated by the alternator.

These periods of operation, in which the battery experiences a reduced state of charge, may be short in duration, and caused by periods of insufficient engine speed or of low engine speed, both of which may result in a net electrical power draw from the battery. Battery discharge is exacerbated during such periods when the electrical load is relatively high, such as is typically experienced during inclement weather when accessories such as rear defogger, heated windshield, heated seats, windshield wipers, headlights and so on are used significantly. It is also well known that cold temperature reduces the charge acceptance rate of a battery, thereby requiring even longer periods of high engine speed to recharge the battery. Additionally, a battery which is at least partially discharged and immediately recharged has a much greater rate of charge acceptance than an equivalently discharged battery which is allowed to sit for a period of 16 hours, roughly equivalent to what is known in the automotive field as "an overnight cold soak", representative of actual expected periods of overnight inactivity.

Automotive electrical loads continue to grow as customer demand for more creature comfort options such as heated seats, heated windshields and so on, continues to rise. Expansion of electronic controls on powertrain and suspension systems, evolution of navigation, intelligent highway and obstacle detection systems as well as numerous other accessories require increased demands for electric power in an automobile. Additionally, rising parasitic loads during periods in which the vehicle is not used make maintaining a high state of charge of the battery under all driving conditions very desirable.

It is well known that alternator output increases with increased engine speed and most alternators can supply power needed to meet most electrical loads at high speeds. Alternator speed is limited by the drive pulley ratio which in turn is dictated by the maximum allowable alternator speed at maximum engine speed. The demand for electrical power at idle is fast approaching, and may already exceed, the supply available from the alternator.

Numerous attempts have been made to address the various hurdles associated with delivering sufficient electrical power, especially during vehicle idling. Citation US-A-4 527 112 discloses a control circuit which is operative when the vehicle engine is running but the vehicle is not in motion to sense vehicle storage battery and, when that voltage is below a predetermined threshold, the engine idling speed is increased. Some gains have been made by adjusting alternator output in accordance with battery temperature in order to recharge the battery most efficiently. Demand side electrical load management is incorporated in the design and development of motor vehicles and includes such things as pulse width modulation control of DC motors, exterior styling compromises to minimise bulb usage, alternative lighting schemes such as discharge type beam headlamps, central source lighting and LED brake lamps. Battery run-down protection systems also have been proposed which are intended to monitor parasitic loads and state of charge of the battery during periods in which the vehicle is not used to disconnect the battery from vehicle electrical loads before the battery becomes too discharged to restart the vehicle.

The present invention seeks to provide an improved method and apparatus for maintaining the state of charge of a vehicle battery.

According to an aspect of the present invention, there is provided a method of maintaining the state of charge of a vehicle battery as specified in claim 1.

According to another aspect of the present invention, there is provided battery charge control apparatus as specified in claim 14.

It is possible in some embodiments to maintain a high level of state of charge of the battery even under low idle and high electrical power load conditions. It is also possible to maintain the state of charge of the battery without having to increase the size or mass of the alternator.

In a preferred embodiment, a vehicle engine drives an alternator for producing electric power for driving vehicle electrical loads and charging the vehicle battery. At sufficiently high alternator speed, as may be deduced from conventional engine speed data and known drive ratio between engine accessory drive and alternator, system voltage is measured to determine the system voltage set-point of the alternator voltage regulator. During continued operation of the vehicle, particularly through periods of engine idle, system voltage is compared with the system voltage set-point. If the system voltage falls too far below the system voltage set-point, thereby indicating power requirements for vehicle electrical loads exceed the power capacity of the alternator at current engine idle speed, engine idle speed is increased thereby to increase the power output of the alternator. When the system voltage is not below the system voltage set-point, thereby indicating power requirements for vehicle electrical loads do not exceed the power capacity of the alternator at current engine idle speed, engine idle speed is decreased thereby to decrease the power output of the alternator and consumption of fuel.

An embodiment of the present invention is described below, by way of example only, with reference to the accompanying drawings, in which:
Figures 1a and 1b are schematic diagrams of examples of vehicle electrical systems;
Figure 2 is a graph showing power capacity curve of an alternator and a typical vehicle electrical load;
Figure 3 is a schematic diagram of an embodiment of battery charge maintenance system;
Figure 4 is a flow chart of an embodiment of control routine for execution by the system of Figure 3.

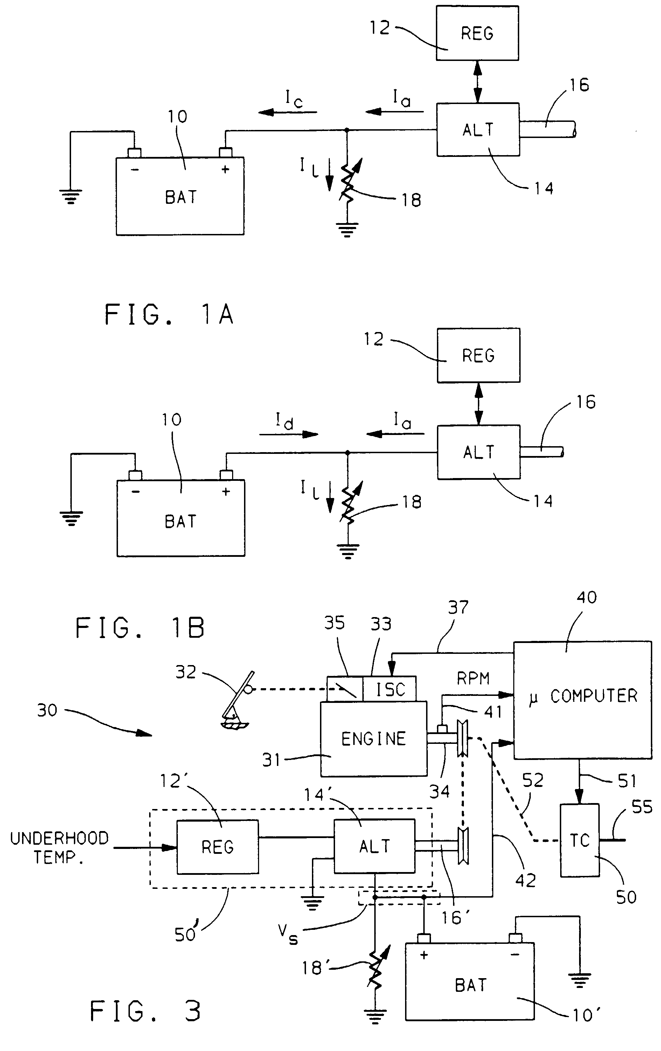

A conventional electrical power system of a motor vehicle comprises a rechargeable electric battery 10, an alternator 14, a voltage regulator 12 and a vehicle electrical load 18, as shown in Figure 1. Alternator power output is predominantly a function of alternator speed and field current, and an increase in either will cause an increase in power output within the physical limits of the alternator. Voltage regulation is typically accomplished by controlling the field current at a particular speed. Voltage regulation is desirable to prevent the system voltage from exceeding a predetermined level, so as to prevent load damage and/or battery gassing during recharge and, just as importantly, so as to ensure that the system voltage does not fall below that required to maintain a fully charged battery.

It is well known that a battery, such as conventional lead acid used in automobiles, accepts less readily charge at lower temperatures, thereby making it desirable to increase charging voltage at lower battery temperatures in order to restore energy thereto at an acceptable rate. The temperature in the engine compartment of the vehicle bears a substantially predictable relationship to battery temperature and is thereby utilised by automotive electrical system designers as a measure thereof, with appropriate calibration. Conventional voltage regulators are designed so as to be dependent upon the temperature in the engine compartment, such that a lower regulator temperature produces a higher regulated voltage set-point and vice-versa.

Referring to Figures 1a and 1b, two basic vehicle electrical systems are illustrated. Battery 10 is a conventional "12-volt" vehicle battery having a negative terminal coupled to vehicle ground and a positive terminal at system voltage. Load 18 represents vehicle electrical loads between system voltage and vehicle ground. Alternator 14 is driven at its input shaft 16 by an internal combustion engine (not shown). Voltage regulator 12 controls current through field windings of alternator 14, attempting to maintain a calibrated system voltage. In practice, production vehicle alternator system voltages may vary within an acceptable range of approximately half (0.5) a volt. If the alternator power capacity is sufficient to drive active electrical loads 18 and restore energy to battery 10, as in Figure 1a, the regulator is operative in "set point regulation" to control system voltage to the calibrated voltage. However, if the alternator power capacity is insufficient to drive the active electrical loads 18, as in Figure 1b, the regulator cannot maintain the calibrated voltage even at maximum field current and system voltage is determined primarily by battery positive terminal voltage. This is termed "auto-regulation" and it is during these periods of operation that the battery is discharged.

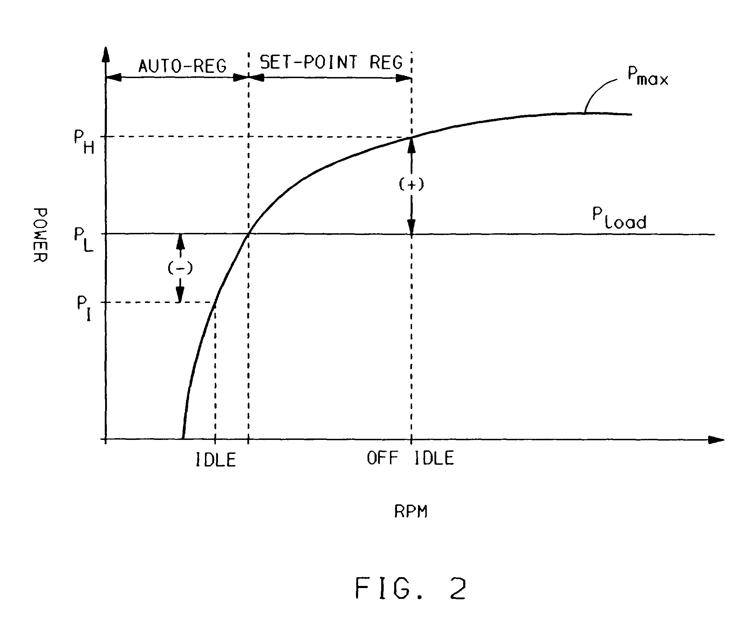

Figure 2 is a graph of power against horizontal RPM, representative of alternator RPM or engine RPM (the alternator rotating in proportion to the engine). Alternator power capacity curve (Pₘₐₓ) represents an alternator maximum power production capacity throughout its operative range. Superimposed on the graph of Figure 2 is a power consumption curve (P_{load}) representing a typical or average vehicle electrical load power consumption (P_{L}) at an acceptable operating system voltage.

Assuming an operating RPM to the left of the intersection of the Pₘₐₓ and P_{load} curves, an alternator power deficit exists. For example, operation at IDLE produces maximum alternator power output of P_{I} which indicates an alternator power deficit equal to P_{I}-P_{L}. The alternator regulator attempts to maintain the calibrated system voltage but cannot do so due to the power delivery limitations thereof. The alternator therefore operates in the region labelled "AUTO-REG" with maximum field current, the system voltage being determined by the battery. The alternator power deficit is taken up by the battery, resulting in a net battery discharge, as shown in Figure 1b by discharge current I_{d}. Not uncommonly, the alternator operates in auto-regulation at relatively low RPM due to total active electrical loads demanding power in excess of the power capacity of the alternator.

Assuming an operating RPM to the right of the intersection of the Pₘₐₓ and P_{load} curves' an alternator power surplus may exist. For example, operation at OFF IDLE can produce maximum alternator power output of P_{H} which indicates an alternator power surplus equal to P_{H}-P_{L}. The alternator therefore operates in the region labelled "SET-POINT REG" with controlled field current, the system voltage being determined by the controlled field current. The battery may accept charge current I_{c} in accordance with its state of charge and any alternator power surplus. When the battery is fully charged, it will not accept any further charge current at the regulated system voltage and actual alternator power will substantially coincide with the power demand of the vehicle loads then active at the regulated system voltage. Any alternator power surplus is therefore taken up by the battery, resulting in battery recharge, as shown in Figure 1a by charge current I_{c}.

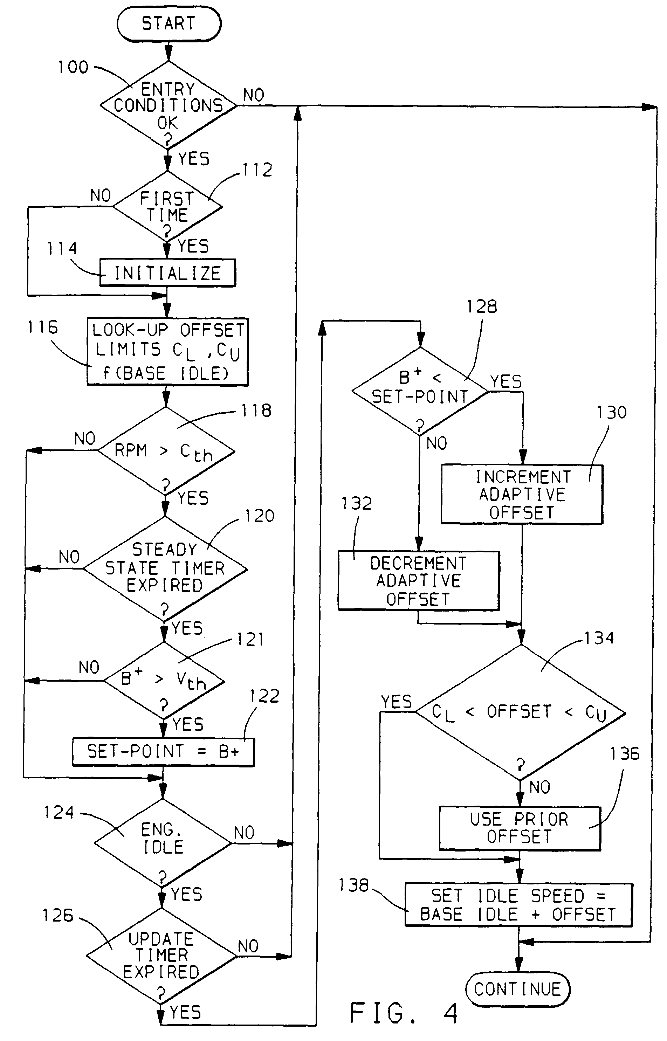

It is desirable to maintain the vehicle battery at a high state of charge. Figure 3 illustrates a preferred vehicle charge maintenance system 30. Internal combustion engine 31 includes a throttle plate 35 coupled to accelerator pedal 32 for control of the rotational speed of the engine output shaft 34 in accordance with driver demand. Driver depression of accelerator pedal 32 defines a first mode of engine operation in which engine speed is substantially determined by the driver. Alternatively, in a vehicle equipped with cruise control, activation of the cruise control function may likewise define a first mode of engine operation consistent with driver demand.

Idle speed controller 33 is responsive to a control signal on line 37 from a conventional engine controller 40. The idle speed controller 33 may be of any known type, such as a throttle plate position control motor or alternatively an idle air bypass valve.

In the absence of any driver demand (accelerator depression or cruise control actuation), a second mode of engine operation is defined in which engine speed is substantially determined by operation of idle speed controller 33 in accordance with a control signal on line 37. Idle speed controller 33 maintains the speed of the engine at a predetermined idling speed according to known vehicle parameters. Engine controller 40 in closed loop manner controls fuel metering and various other engine functions in known manner.

Alternator 14' includes an input shaft 16' drivingly connected to output shaft 34 of engine 31. Conventionally, an accessory drive belt and pulley arrangement are employed to transmit rotational force to the alternator from the engine at a fixed predetermined ratio, typically 1 to 3 (engine to alternator). The output terminal of alternator 14' is coupled to vehicle ground, while regulator 12' controls field current to alternator 14' in accordance with engine compartment temperature, which provides a measure of battery temperature. Regulator 12' and alternator 14' are shown as an integrated unit 50' as is common practice in the art. Battery 10' has a negative terminal coupled to vehicle ground and a positive terminal coupled to the alternator output terminal and one end of vehicle electrical load 18' to define system voltage node Vs. System voltage node Vs is also coupled to an input to engine controller 40 via line 42, as is a signal from a speed sensor 41 coupled to the engine output shaft 34.

In the preferred embodiment, during closed-loop engine control, the speed of the engine output shaft 34 is monitored and used as an adaptive system voltage update flag. Once a predetermined threshold engine speed indicative of substantially high alternator speed is crossed and engine speed is maintained above or within a predetermined range of the threshold for a predetermined time, recording of the current system voltage as the set system voltage is initiated. Since during off idle operation the alternator power capacity is typically a high percentage of its maximum power capacity, it can be assumed that the alternator is operative in the set-point regulation region of Figure 2 and the current system voltage can be used to reflect the current system voltage set-point. However, in the rare instance where the alternator may be operative in the auto-regulation region even during off idle operation (for example when all vehicle electrical accessories are activated), it is desirable to check the magnitude of the current system voltage before proceeding with an update of the system voltage set-point and defer any update when the current system voltage indicates that the system is operative in the auto-regulation region. The control method iteratively re-learns the system voltage set-point as the vehicle continues to operate.

Driver speed control of the engine as determined by the accelerator pedal or cruise control bypasses any further control steps. When engine speed is determined by idle speed controller 33, the current system voltage is compared to the learned system voltage set-point. The magnitude and algebraic sign of the difference between system voltage and system voltage set-point is used to initiate periodic incremental changes to the idle speed within predetermined limits to control system voltage to system voltage set-point.

Referring to Figure 4, there is shown a flow chart of an embodiment of program steps executed by engine controller 40. Preferably, program steps corresponding to the flow chart are executed within the standard engine control loop, for example at 100 millisecond intervals. Decision step 100 is first encountered as a check of certain entry conditions. For example, step 100 in this embodiment checks a predetermined engine temperature for indication of closed-loop engine control. When the engine is not operating in closed-loop manner, processing bypasses the remainder of steps 102-138. If the engine is operating in closed-loop manner, then steps 112 and 114 may initialise certain registers used for variables and timers in the remaining calculations and control. Step 116 reads values from a calibration table (stored in ROM) for current upper and lower limits "Cᵤ" and "Cₗ" respectively of a later determined idle speed offset "OFFSET". The limits are a function of a predetermined base idle and determine additively therewith absolute limits on a lower and upper idle speed. When, for example, a request for air conditioning is made, it is common to boost BASE IDLE by a predetermined amount which, if the absolute upper and lower idle speed limits are to be maintained, necessitates different offset limits Cᵤ and Cₗ. It will be apparent that the absolute upper and lower idle speed limits are within the discretion of the designer, taking into account such factors as idle roughness, stall speed, fuel consumption, engine noise and vehicle creep torque when applied to a fluid coupled engine/transmission arrangement.

Referring back to Figure 3, such a torque converter 50 is illustrated, coupled to engine output shaft 34 via dotted line 52. Output 55 from torque converter 50 is representative of a conventional output to final drive and transmission gear elements (not shown). Line 51 is a control line for controlling the torque coupling between the engine and final drive by any known method. For example, US 3,852,955 and US 4,180,977 both illustrate systems which either drain torque converter fluid to decouple engine torque output completely from the vehicle final drive or which vary stator reaction elements to decouple engine torque variably from the vehicle final drive.

Steps 118-122 form the portion of the control routine which determine the adaptively learned system voltage set-point. Decision step 118 checks engine speed against a predetermined speed threshold "Cₜₕ". Cₜₕ is a calibration value representative of a commonly attained engine speed corresponding to a predetermined alternator speed in accordance with the known drive ratio between the engine output shaft and alternator input shaft. Of course, alternator speed could be determined directly at the expense of an additional rotation sensing transducer and circuitry. For this reason, the existing engine control parameter of engine speed is preferably utilised. The speed threshold Cₜₕ is chosen to correspond to a relatively high alternator power capacity, for example greater than 90% of maximum alternator power capacity. When it has been determined at step 120 that speed has stabilised above the speed threshold Cₜₕ for a time sufficient to assume relatively stable regulator operation (two seconds in this embodiment), the routine moves to decision step 121 which checks if the system is operating in set-point regulation, by comparing the predetermined present system voltage "B+" with a voltage threshold "Vₜₕ". In this embodiment, the threshold Vₜₕ is set to 12.5 volts, which conservatively would indicate that an alternator power deficit exists and the battery terminal voltage is determining system voltage. Where B+ exceeds the voltage threshold Vₜₕ, it is assumed that set-point regulation is operative and B+ is substantially representative of the system voltage set-point thereby passing control to step 122, at which the system voltage set-point is updated on the basis of the current system voltage B+.

Where B+ does not exceed the threshold Vₜₕ, auto-regulation is assumed to be operative. Since B+ is substantially representative of battery voltage during discharge, it is no longer an accurate representation of system voltage set-point and the set-point update is bypassed. In summary, where the speed, steady state or set-point regulation conditions are not satisfied respectively at steps 118, 120 and 121, no adaptive learning of system voltage set-point is performed and the system voltage set-point remains equal to the previous system voltage set-point.

Processing continues from step 122 to decision step 124 at which it is determined whether the driver is controlling engine speed or if the engine is operating in an idle mode. This can be accomplished by checking any one of various engine control parameters such as throttle valve position or cruise control activation. If the engine is in an idle mode, control continues to decision step 126 to determine if a predetermined period of time has expired since the most recent idle speed adjustment. Step 126 in this embodiment provides for a period of five seconds between any idle speed adjustments occasioned by the routine, this having been found to provide acceptable rates of adjustment. If an update of idle speed is appropriate, processing passes to the OFFSET determination steps 128-138. However, if the engine speed is under driver control or the last OFFSET update is too recent, OFFSET determination steps 128-138 are bypassed.

Proceeding with step 128, the current system voltage B+ is compared to the adaptively learned system voltage set-point. When B+ is less than the system voltage set-point, it is assumed that the regulator is operating in auto-regulation and an idle speed increase may be desirable. Likewise, when B+ is greater than the system voltage set-point, an idle speed decrease may be desirable. Steps 130 and 132 provide an increase and decrease idle speed OFFSET, respectively, by predetermined stepped amounts. Preferably, any increasing or decreasing in OFFSET includes some hysteresis to avoid undesirable idle speed hunting. For example, increases and decreases in OFFSET will occur only if the magnitude of the difference between B+ and set-point exceeds a predetermined amount. This embodiment utilises an amount related to the voltage resolution of the controller. Additionally, it may be desirable to decrease OFFSET in stepped amounts of smaller magnitude relative the increase OFFSET stepped amounts, so as to ensure sufficient operating time at higher idle speeds. OFFSET is checked at step 134 to determine if it falls within the upper and lower limits previously established in relation to the BASE IDLE. If OFFSET is outside the established limits, it is set to the previous OFFSET at 136. Otherwise, step 136 is bypassed and IDLE speed is set to the sum of the current BASE IDLE and OFFSET values. IDLE speed is then utilised in known manner to control engine speed in closed-loop manner to the idle speed RPM value represented thereby.

In an embodiment, upper and lower OFFSET limits Cᵤ and Cₗ are influenced by torque decoupling or torque reduced coupling of the engine from the final drive in a fluid coupled automatic transmission equipped vehicle. As mentioned with regard to calibrating OFFSET limits, creep torque and stall speed are factors which are considered in this embodiment. Reducing or eliminating torque coupling of the engine to the final drive effectively reduces the creep torque which otherwise would increase with any increase in idle speed. Likewise, such a reduction or elimination of idle torque coupling may allow for lower idle stall speeds or at least reduced fuel consumption at equivalent idle speeds due to the reduced idle torque load on the decoupled engine. US-A-3,852,955 and US-A-4,180,977 disclose two exemplary fluid couplings which may be adapted for providing reduced torque coupling as described above. Therefore, the routine described above can be readily adapted to vary torque coupling of the engine to final drive, thereby increasing at least the upper OFFSET limit Cᵤ to allow higher idle speed and increased power generation by the alternator.

## Claims

1. A method of maintaining the state of charge of a vehicle battery in a vehicle including idle speed control means, a battery, an alternator for supplying electrical power to vehicle electrical loads and for charging the battery and a voltage regulator for establishing a regulated system voltage set-point, the method comprising the steps of determining a first system voltage during a first mode of engine operation; determining a second system voltage during a second mode of engine operation; comparing the first and second system voltages and producing a control signal therefrom related to the difference therebetween; and varying the idle speed of the engine in accordance with the control signal.

2. A method according to claim 1, wherein the first system voltage is determined when idle speed control is inactive.

3. A method according to claim 1 or 2, wherein the second system voltage is determined when the engine is operating in an idle speed control mode.

4. A method according to any preceding claim, wherein the first system voltage is the regulated system voltage set-point; the method comprising the step of determining periodically the regulated system voltage set-point.

5. A method according to claim 4, wherein the step of periodically determining the regulated system voltage set-point is carried out when one of engine speed and alternator speed exceeds a predetermined speed.

6. A method according to claim 4 or 5, wherein the step of periodically determining the regulated system voltage set-point includes the step of updating a previously determined regulated system voltage set-point with a previously determined system voltage.

7. A method according to claim 6, comprising the step of inhibiting the updating of the previously determined regulated system voltage set-point if the previously determined system voltage does not exceed a predetermined threshold voltage.

8. A method according to any preceding claim, wherein the idle speed of the engine is changed by a predetermined idle speed offset.

9. A method for according to claim 8, wherein the step of changing the idle speed comprises the steps of cumulating an adaptive idle speed offset and summing the offset with a predetermined base idle speed.

10. A method according to claim 8 or 9, wherein the step of changing the idle speed comprises changing the idle speed (a) by a first predetermined idle speed offset when the regulated system voltage set-point exceeds the system voltage by a predetermined margin, and (b) by a second predetermined idle speed offset when the regulated system voltage set-point does not exceed the system voltage by the predetermined margin.

11. A method according to claim 10, wherein the second predetermined idle speed offset is smaller in magnitude than the first predetermined idle speed offset.

12. A method according to any preceding claim, comprising the step of governing the idle speed to predetermined maximum and minimum idle speeds.

13. A method according to any preceding claim, comprising the step of reducing torque coupled from the engine to a final drive during periods of idle speed control.

14. Battery charge control apparatus for maintaining the state of charge of a vehicle battery in a vehicle including a battery, an alternator for supplying electrical power to vehicle electrical loads and for charging the battery and a voltage regulator for establishing a regulated system voltage set-point; the apparatus comprising first determining means (40) for determining a first system voltage during a first mode of engine operation; second determining means (40) for determining a second system voltage during a second mode of engine operation; a comparator (40) for comparing the first and second system voltages and for producing a control signal in accordance with the comparison; and speed control means (33) responsive to the control signal for varying the idle speed in accordance therewith.

15. Battery charge control apparatus according to claim 14, wherein the first mode of engine operation comprises an off idle mode in excess of a predetermined speed; and the second mode of engine operation comprises an idle mode.

16. Battery charge control apparatus according to claim 14 or 15, wherein the speed control means comprises idle air bypass means (33).

17. Battery charge control apparatus according to claim 14, 15 or 16, wherein the first determining means is operative when engine speed exceeds a predetermined threshold; and the second determining means is operative when engine speed is with a predetermined idle speed range.

## Patentansprüche

1. Verfahren zum Aufrechterhalten des Ladezustandes einer Fahrzeugbatterie in einem Fahrzeug, das ein Leerlaufgeschwindigkeitssteuerungsmittel, eine Batterie, einen Wechselstromgenerator zum Zuführen elektrischer Leistung zu elektrischen Fahrzeuglasten und zum Laden der Batterie und einen Spannungsregler zum Festlegen eines geregelten Systemspannung-Sollwerts umfaßt, wobei das Verfahren die Schritte umfaßt, daß eine erste Systemspannung während eines ersten Motorbetriebsmodus bestimmt wird; eine zweite Systemspannung während eines zweiten Motorbetriebsmodus bestimmt wird; die ersten und zweiten Systemspannungen verglichen werden und daraus ein Steuersignal erzeugt wird, das mit der Differenz dazwischen in Beziehung steht; und die Leerlaufgeschwindigkeit des Motors gemäß dem Steuersignal verändert wird.

2. Verfahren nach Anspruch 1, wobei die erste Systemspannung bestimmt wird, wenn die Leerlaufgeschwindigkeitssteuerung nicht aktiv ist.

3. Verfahren nach Anspruch 1 oder 2, wobei die zweite Systemspannung bestimmt wird, wenn der Motor in einem Leerlaufgeschwindigkeitssteuerungsmodus arbeitet.

4. Verfahren nach einem der vorhergehenden Ansprüche, wobei die erste Systemspannung der geregelte Systemspannung-Sollwert ist; wobei das Verfahren den Schritt umfaßt, daß der geregelte Systemspannung-Sollwert periodisch bestimmt wird.

5. Verfahren nach Anspruch 4, wobei der Schritt des periodischen Bestimmens des geregelten Systemspannung-Sollwerts ausgeführt wird, wenn entweder die Motorgeschwindigkeit oder die Wechselstromgeneratorgeschwindigkeit eine vorbestimmte Geschwindigkeit überschreitet.

6. Verfahren nach Anspruch 4 oder 5, wobei der Schritt des periodischen Bestimmens des geregelten Systemspannung-Sollwerts den Schritt umfaßt, daß ein zuvor bestimmter geregelter Systemspannung-Sollwert mit einer zuvor bestimmten Systemspannung aktualisiert wird.

7. Verfahren nach Anspruch 6 mit dem Schritt, daß die Aktualisierung des zuvor bestimmten geregelten Systemspannung-Sollwerts verhindert wird, wenn die zuvor bestimmte Systemspannung eine vorbestimmte Schwellenspannung nicht überschreitet.

8. Verfahren nach einem der vorhergehenden Ansprüche, wobei die Leerlaufgeschwindigkeit des Motors um einen vorbestimmten Leerlaufgeschwindigkeit-Offset verändert wird.

9. Verfahren nach Anspruch 8, wobei der Schritt des Veränderns der Leerlaufgeschwindigkeit die Schritte umfaßt, daß ein adaptiver Leerlaufgeschwindigkeit-Offset angehäuft wird, und der Offset mit einer vorbestimmten Grundleerlaufgeschwindigkeit summiert wird.

10. Verfahren nach Anspruch 8 oder 9, wobei der Schritt des Veränderns der Leerlaufgeschwindigkeit umfaßt, daß die Leerlaufgeschwindigkeit geändert wird (a) um einen ersten vorbestimmten Leerlaufgeschwindigkeit-Offset, wenn der geregelte Systemspannung-Sollwert die Systemspannung um eine vorbestimmte Spanne überschreitet, und (b) um einen zweiten vorbestimmten Leerlaufgeschwindigkeit-Offset, wenn der geregelte Systemspannung-Sollwert die Systemspannung nicht um die vorbestimmte Spanne überschreitet.

11. Verfahren nach Anspruch 10, wobei der zweite vorbestimmte Leerlaufgeschwindigkeit-Offset eine kleinere Größe als der erste vorbestimmte Leerlaufgeschwindigkeit-Offset aufweist.

12. Verfahren nach einem der vorhergehenden Ansprüche mit dem Schritt, daß die Leerlaufgeschwindigkeit zu vorbestimmten maximalen und minimalen Leerlaufgeschwindigkeiten geleitet wird.

13. Verfahren nach einem der vorhergehenden Ansprüche mit dem Schritt, daß Drehmoment, das von dem Motor an einen Endantrieb gekoppelt wird, während Perioden von Leerlaufgeschwindigkeitssteuerung verringert wird.

14. Batterieladesteuerungsvorrichtung zum Aufrechterhalten des Ladezustandes einer Fahrzeugbatterie in einem Fahrzeug, das eine Batterie, einen Wechselstromgenerator zum Zuführen elektrischer Leistung zu elektrischen Fahrzeuglasten und zum Laden der Batterie und einen Spannungsregler zum Festlegen eines geregelten Systemspannung-Sollwerts umfaßt; wobei die Vorrichtung umfaßt: ein erstes Bestimmungsmittel (40) zum Bestimmen einer ersten Systemspannung während eines ersten Motorbetriebsmodus; ein zweites Bestimmungsmittel (40) zum Bestimmen einer zweiten Systemspannung während eines zweiten Motorbetriebsmodus; einen Komparator (40) zum Vergleichen der ersten und zweiten Systemspannungen und zum Erzeugen eines Steuersignals gemäß dem Vergleich; und ein Geschwindigkeitssteuermittel (33), das auf das Steuersignal anspricht, zum Verändern der Motorgeschwindigkeit in Übereinstimmung damit.

15. Batterieladesteuerungsvorrichtung nach Anspruch 14, wobei der erste Motorbetriebsmodus einen Weg-von-Leerlauf-Modus über eine vorbestimmte Geschwindigkeit hinaus umfaßt; und der zweite Motorbetriebsmodus einen Leerlaufmodus umfaßt.

16. Batterieladesteuerungsvorrichtung nach Anspruch 14 oder 15, wobei das Geschwindigkeitssteuerungsmittel ein Leerlaufluftumgehungsmittel (33) umfaßt.

17. Batterieladesteuerungsvorrichtung nach Anspruch 14, 15 oder 16, wobei das erste Bestimmungsmittel arbeitet, wenn die Motorgeschwindigkeit eine vorbestimmte Schwelle überschreitet; und das zweite Bestimmungsmittel arbeitet, wenn die Motorgeschwindigkeit in einem vorbestimmten Leerlaufgeschwindigkeitsbereich liegt.

## Revendications

1. Procédé de maintien de l'état de charge d'une batterie de véhicule dans un véhicule, comprenant des moyens de commande de la vitesse au ralenti, une batterie, un alternateur pour fournir de l'énergie électrique à des charges électriques du véhicule et pour charger la batterie et un régulateur de tension pour établir un point de consigne régulé de la tension du système, le procédé comprenant les étapes de détermination d'une première tension du système au cours d'un premier mode de fonctionnement du moteur, de détermination d'une seconde tension du système au cours d'un second mode de fonctionnement du moteur; de comparaison de la première et de la seconde tensions du système et de production d'un signal de commande à partir de celle-ci qui se rapporte à la différence mutuelle; et de variation de la vitesse au ralenti du moteur conformément au signal de commande.

2. Procédé selon la revendication 1 dans lequel la première tension du système est déterminée lorsque la commande de vitesse au ralenti est inactivée.

3. Procédé selon la revendication 1 ou 2, dans lequel la seconde tension du système est déterminée lorsque le moteur opère en mode de commande de vitesse au ralenti.

4. Procédé selon l'une quelconque des revendications précédentes, dans lequel la première tension du système est le point de consigne régulé de la tension du système, le procédé comprenant l'étape de détermination périodique du point de consigne régulé de la tension du système.

5. Procédé selon la revendication 4, dans lequel l'étape de détermination périodique du point de consigne régulé de la tension du système est réalisée lorsque la vitesse du moteur ou la vitesse de l'alternateur dépasse une vitesse prédéterminée.

6. Procédé selon la revendication selon la revendication 4 ou 5, dans lequel l'étape de détermination périodique du point de consigne régulé de la tension du système comprend l'étape de mise à jour d'un point de consigne régulé préalablement déterminé de la tension du système avec une tension préalablement déterminée du système.

7. Procédé selon la revendication 6, comprenant l'étape d'inhibition de la mise à jour du point de consigne préalablement déterminé de la tension régulée du système si la tension préalablement déterminée du système ne dépasse pas une tension de seuil prédéterminée.

8. Procédé selon l'une quelconque des revendications précédentes, dans lequel la vitesse de ralenti du moteur est modifiée par décalage de vitesse de ralenti prédéterminée.

9. Procédé selon la revendication 8, dans lequel l'étape de changement de la vitesse de ralenti comprend les étapes de cumulation d'un décalage de vitesse de ralenti adaptatif et la sommation du décalage avec une vitesse de ralenti de base prédéterminée.

10. Procédé selon la revendication 8 ou 9, dans lequel l'étape de changement de la vitesse de ralenti comprend le changement de la vitesse de ralenti (a) par un premier décalage de vitesse de ralenti prédéterminé lorsque le point de consigne régulé de la tension du système dépasse la tension du système d'une marge prédéterminée, et b) par un second décalage prédéterminé de la vitesse de ralenti lorsque le point de consigne régulé de la tension du système ne dépasse pas la tension du système de la marge prédéterminée.

11. Procédé selon la revendication 10, dans lequel le second décalage de vitesse de ralenti prédéterminée a une grandeur plus faible que le premier décalage de vitesse de ralenti prédéterminé.

12. Procédé selon l'une quelconque des revendications précédentes, comprenant l'étape de contrôle de la vitesse de ralenti à des vitesses de ralenti maximale et minimale prédéterminées.

13. Procédé selon l'une quelconque des revendications précédentes, comprenant l'étape de réduction du couple de torsion couplé entre le moteur et l'entraînement final au cours de périodes de commande de la vitesse au ralenti.

14. Appareil de commande de charge de batterie pour maintenir l'état de charge d'une batterie de véhicule dans un véhicule, comprenant une batterie, un alternateur pour alimenter en énergie électriques des charges électriques du véhicule et pour charger la batterie et un régulateur de tension pour établir un point de consigne régulé de la tension du système, l'appareil comprenant un premier moyen de détermination (40) pour déterminer une première tension du système au cours d'un premier mode de fonctionnement du moteur; un second moyen de détermination (40) pour déterminer une seconde tension du système au cours d'un second mode de fonctionnement du moteur; un comparateur (40) pour comparer la première et la seconde tensions du système et pour produire un signal de commande en fonction de la comparaison; et un moyen de commande de vitesse (33) sensible au signal de commande pour faire varier la vitesse de ralenti en fonction de celle-ci.

15. Appareil de commande de charge de batterie selon la revendication 14, dans lequel le premier mode de fonctionnement du moteur comprend un mode hors ralenti dépassant une vitesse prédéterminée et le second mode de fonctionnement du moteur comprend un mode de ralenti.

16. Appareil de commande de charge de batterie selon la revendication 14 ou 15, dans lequel le moyen de commande de vitesse comprend un moyen de contournement d'air au ralenti (33).

17. Appareil de commande de charge de batterie selon la revendication 14, 15 ou 16, dans lequel le premier moyen de détermination opère lorsque la vitesse du moteur dépasse un seuil prédéterminé et le second moyen de détermination opère lorsque la vitesse du moteur se situe dans une plage de vitesses de ralenti prédéterminées.
